# EUROPEAN PATENT SPECIFICATION

(11) **EP 4 212 380 B1**
(45) Date of publication and mention of the grant of the patent: **04.03.2026**
(21) Application number: 22151883.0
(22) Date of filing: 17.01.2022
(51) Int. Cl.: B60L 53/14, B60L 1/00, B60L 7/24, B60T 7/12, B60L 3/00, B60L 53/16, B60T 17/18, B60T 1/00, B60T 7/20, B60T 13/68, B60T 15/02, B62D 59/04

(54) **VEHICLE AND METHOD OF IMMOBILISING A VEHICLE**
FAHRZEUG UND VERFAHREN ZUR IMMOBILISIERUNG EINES FAHRZEUGS
VÉHICULE ET PROCÉDÉ D'IMMOBILISATION D'UN VÉHICULE

(43) Date of publication of application: 19.07.2023
(73) Proprietor: Carrier Corporation, Palm Beach Gardens, FL 33418 (US)
(72) Inventor: CHAPEAU, Lucas, 76230, Isneauville (FR)
(74) Representative: Dehns

(56) References cited:
- EP-A1- 2 169 802
- WO-A1-2018/007799
- WO-A1-2020/069107
- US-A1- 2013 332 019
- US-A1- 2014 021 779
- US-A1- 2015 097 525
- US-A1- 2015 251 551
- US-A1- 2016 075 175
- US-A1- 2019 302 764
- US-A1- 2020 130 645

## Description

The present invention relates to a vehicle and a method of immobilising a vehicle.

As battery technology improves, the use of electrical motors and electrically-powered devices in place of petroleum-powered equivalents is increasing. For example, in cold chain logistics networks, both the use of electrically-powered transport refrigeration units (TRUs), and the use of electrically-powered vehicles to transport TRUs, is increasing.

Such devices are powered by electrical energy storage devices, which require recharging once they have dissipated their stored energy. This amounts to the recharging of electrical energy storage devices at regular intervals, particularly when used in cold chain logistics networks.

As the power supplied to the energy storage devices, usually from one or more remote charging stations, is of a high voltage, there are a number of safety concerns regarding the fast and efficient recharging of energy storage devices for electric vehicles and TRUs. Such safety concerns are starting to be recognised by safety regulators. For example, Regulation No. 100 of the Economic Commission for Europe of the United Nations, provides for the approval of vehicles with regard to specific requirements for electric power trains.

To address one or more safety concerns regarding the fast and efficient recharging of energy storage devices for electric vehicles and TRUs, and to achieve compliance with developing health and safety requirements, it is desirable to provide a device which facilitates charging whilst addressing one or more of the aforementioned problems.

US 2014/021779 A1 discloses systems and methods for modifying the operation of one or more onboard generators on a vehicle in response to the transfer of electric power to the vehicle.

WO 2018/007799 A1 discloses a vehicle braking security system for immobilising a vehicle.

WO 2020/069107 A1 discloses a transport refrigeration system of a vehicle having a vehicle energy storage device that stores electrical power for a propulsion motor that propels the vehicle.

US 2015/097525 A1 discloses the detection of an onboard charger connection to electric vehicle supply equipment of an electric and/or plug-in hybrid vehicle.

US 2013/332019 A1 discloses a shift-lock apparatus for a vehicle, which prevents a user of the vehicle from shifting out of park when it is determined that a charging cable is connected to the vehicle.

US 2020/130645 A1 discloses a drive off protection system and a method for preventing drive off when an electrical power system is electrically connected to a refrigerated transport unit.

Viewed from a first aspect of the present invention there is provided a vehicle comprising: a transport refrigeration unit (TRU); a power management system for supplying power to the transport refrigeration unit, wherein the power management system comprises an electric charging connector and a controller configured to determine if a charging cable is engaged with the electric charging connector; and a braking system; wherein, in response to the controller determining that a charging cable is engaged with the electric charging connector, the braking system is configured to immobilise the vehicle; wherein the braking system comprises a park release emergency valve in communication with a plurality of brakes; wherein the park release emergency valve is operable to immobilise the vehicle; and wherein the braking system comprises a release valve, wherein, in response to the controller determining that a charging cable is engaged with the electric charging connector, the release valve is configured to decompress fluid supplied to the park release emergency valve such that the vehicle is immobilised.

TRUs require recharging at regular intervals, and hence vehicles comprising TRUs will regularly have electric charging cables connected to them. By immobilising the vehicle when a charging cable is engaged with an electric charging connector of the vehicle, the vehicle is prevented from driving away when the charging cable is connected to the vehicle. This prevents the vehicle from driving away with the charging cable still engaged, which could damage the charging cable and/or the electric charging connector of the vehicle. Thus, when an operator or driver of the vehicle forgets to unplug the charging cable, or if the vehicle may still move once the charging cable is engaged to the vehicle, the vehicle is prevented from moving and a risk of accidental damage may be mitigated.

Further, the electric charging of vehicles via a charging cable may require the use of high voltage power supplies. If a charging cable were to become damaged, or were to rapidly disconnect in an uncontrolled manner due to movement of the vehicle, an electrical hazard may arise. Thus, by immobilising the vehicle when an electric charging cable is engaged to the vehicle, use of electric charging equipment for charging vehicles and equipment thereon may be made safer.

The power management system may be a power management system dedicated to the TRU (and hence the TRU may comprise the power management system), or may be a more general power management system belonging to the vehicle. The power management system may be configured to regulate power supply to one or more components of the vehicle, the one or more components including the TRU.

The TRU may be operated to cool or heat the vehicle, or a monitored environment within the vehicle, depending on its mode of operation. The monitored environment may be a storage space, located in a container, cargo hold or the like.

The vehicle may comprise a storage space, such as a container or the like. The TRU may be configured to regulate, or monitor, an environment of the storage space.

The TRU may comprise one or more electrically powered components, such as a compressor, an evaporator fan and a condenser fan. The electrically powered components of the TRU are powered by the power management system.

The braking system may generally comprise a plurality of brakes, each of which are in communication with a respective wheel of the vehicle. Each brake may be configured to decelerate, or immobilise, the vehicle. Each of the plurality of brakes may be operable as both a parking brake and a service brake. Alternatively, the plurality of brakes may comprise both a plurality of parking brakes and a plurality of service brakes.

The braking system comprises a park release emergency valve in communication with a plurality of brakes, wherein the park release emergency valve is operable to immobilise the vehicle.

The park release emergency valve is selectively operated in response to the controller determining that a charging cable is engaged to the electric charging connector.

The park release emergency valve may be configured to selectively operate the plurality of brakes, preferably wherein the plurality of brakes comprise a plurality of parking brakes. The park release emergency valve may be configured to disengage the plurality of brakes by supplying compressed air to the plurality of brakes. The park release emergency valve may be configured to engage the plurality of parking brakes by removing a supply of compressed air to the plurality of brakes. Additionally or alternatively, the park release emergency valve may be configured to engage the plurality of brakes by decompressing air supplied to the plurality of brakes.

The braking system may comprise an electronic braking system configured to selectively operate the park release emergency valve. In response to the controller determining that a charging cable is engaged with the electric charging connector, the electronic braking system may be configured to operate the park release emergency valve such that the vehicle is immobilised.

The electronic braking system is preferably in electronic communication with the controller. The electronic braking system may be in wireless and/or wired communication with the controller.

The electronic braking system may be configured to control a flow of compressed air to one or more of the plurality of brakes. The electronic braking system may be configured to control a flow of compressed air to the park release emergency valve, such that the park release emergency valve may engage and/or disengage the plurality of brakes accordingly.

The electronic braking system may be configured to operate one or more service brakes of the vehicle. The electronic braking system may be configured to engage the plurality of brakes by supplying compressed air to the plurality of brakes. The electronic braking system may be configured to disengage the plurality of brakes by removing a supply of compressed air to the plurality of brakes and/or by decompressing a supply of compressed air to the plurality of brakes.

The electronic braking system may be in electronic communication with one or more brake controls of the vehicle. Each of the one or more brake controls of the vehicle may be mechanically operable by a driver of the vehicle.

The braking system comprises a release valve, wherein, in response to the controller determining that a charging cable is engaged with the electric charging connector, the release valve is configured to decompress fluid supplied to the park release emergency valve such that the vehicle is immobilised.

The release valve is configured to decompress fluid supplied to the park release emergency valve. This, in turn, decompresses fluid supplied from the park release emergency valve to the plurality of brakes, causing the plurality of brakes to engage. In this manner, control of the release valve may override control of the park release emergency valve.

As the release valve itself is configured to decompress fluid supplied to the park release emergency valve, and is operable directly by the controller, the release valve may be easily retrofitted to existing brake systems. As such, existing vehicles comprising park release emergency valves may be reconfigured such that they may be reliably immobilised when it is detected that a charging cable remains engaged to the vehicle. This may be particularly advantageous for vehicles comprising an existing electronic brake system, which may not be easily reconfigured or reprogrammed upon installation in a vehicle.

The release valve is preferably in electronic communication with the controller. The release valve may be in wired and/or wireless communication with the controller. The release valve may be a solenoid valve, and more preferably may be a servo valve.

As mentioned above, the braking system may comprise an electronic braking system configured to selectively operate the park release emergency valve. In arrangements where the braking system also comprises a release valve, the release valve is preferably located between the electronic braking system and the park release emergency valve.

Providing the release valve between the electronic braking system and park release emergency valve may allow the release valve to control a flow of compressed air to the park release emergency valve in a manner similar to that of the electronic braking system. As such, control of the park release emergency valve may be possible by either the release valve or the electronic braking system. As the release valve is not a part of the electronic braking system however, vehicles may be more easily retrofitted with a release valve, rather than their electronic braking systems being reconfigured, such that they may be immobilised upon determining that a charging cable is connected to the vehicle.

Further, as the release valve is located between the electronic braking system and the park release emergency valve, the release valve may override any control from the electronic braking system. For example, if the electronic braking system is operated so as to disengage the parking brake, and hence supply compressed air to the park release emergency valve, the release valve may decompress this air accordingly. As such the vehicle may be immobilised in desirable situations further to those initiated by the electronic braking system.

The release valve is preferably controllable independently of the electronic braking system.

By providing control of the release valve independent to any control by the electronic braking system, i.e. direct control of the release valve via the controller, the vehicle may be reliably immobilised independent of the operation of the electronic braking system. This may result in the vehicle being more reliably immobilised, as control of the release valve may override any control of the park release emergency valve and/or the release valve itself from the electronic braking system.

The electronic braking system may be in electronic communication with the release valve. The electronic braking system may be configured to selectively operate the release valve, in response to determining that a charging cable is engaged to the electric charging connector.

Whilst control of the release valve may be primarily performed by the controller, in the event that communication between the release valve and the controller fails, introducing redundancy to the control of the release valve may improve reliability of the control of the release valve.

A pneumatic module may be in fluid communication with the park release emergency valve and the electronic braking system.

The pneumatic module may be configured to regulate a flow of compressed air to the electronic braking system, and may additionally be configured to store compressed air. The pneumatic module may comprise an air tank configured to store the compressed air.

The vehicle may comprise one or more sensors, with the controller in communication with the one or more sensors. Each of the one or more sensors may be configured to detect that a charging cable is engaged with the electric charging connector.

The one or more sensors may comprise a voltmeter, wherein the voltmeter is configured to detect a voltage when the power management system receives electrical power by a charging cable.

The one or more sensors may comprise a magnetic switch, wherein the magnetic switch is configured to activate when a charging cable is engaged with the electric charging connector.

The magnetic switch may be fixed to a housing of the electric charging connector using an appropriate housing. The magnetic may be configured to abut, or be in proximity to, a magnet fixed to a housing of the electric charging connector. The magnet may be configured to activate the magnetic switch, for example by motivating two contacts together in the present of its magnetic field.

The one or more sensors may comprise a depressible pin, wherein the depressible pin is configured to depress when a charging cable is engaged with the electric charging connector.

The depressible pin may be configured to be depressed upon contact with a lid of the electric charging connector. Alternatively, the depressible pin may be configured to depress upon contact with the charging cable. The depressible pin may be spring-loaded, such that it requires maintained contact to be activated.

The one or more sensors may comprise an incomplete sensing circuit, wherein the incomplete sensing circuit is configured to be completed when a charging cable is engaged with the electric charging connector.

The incomplete sensing circuit may comprise two first electrical contacts configured to engage two respective second electrical contacts of the charging cable. The two first electrical contacts may be isolated from one another. The two respective second electrical contacts may be connected to one another. Accordingly, upon contact between the first electrical contacts and the second electrical contacts, the sensing circuit is completed.

The sensing circuit may comprise one or more voltmeters and/or ammeters configured to determine if the sensing circuit is completed. The controller may be in communication with the one or more voltmeters and/or ammeters.

The vehicle may be a trailer for a tractor. The trailer may be in electronic communication with the tractor. The braking system may be configured to be operated by one or more brake controls located in the tractor. The braking system may be a brake-by-wire braking system.

Viewed from a second aspect, there is provided a method of immobilising a vehicle of the first aspect when a charging cable is connected thereto. The method comprises: determining that a charging cable is engaged with the electric charging connector; and subsequently activating the braking system such that the vehicle is immobilised.

The step of determining that a charging cable is engaged with the electric charging connector is performed using the controller.

The braking system may comprise a park release emergency valve in communication with a plurality of brakes. Activating the braking system may comprise operating a park release emergency valve to immobilise the vehicle.

The park release emergency valve may be operated using an electronic braking system.

The braking system may comprise a release valve. Activating the braking system may comprise operating the release valve. The release valve may be configured to decompress fluid supplied to the park release emergency valve using a release valve, such that the vehicle is immobilised.

The release valve may be operated using the controller. Additionally or alternatively, the release valve may also be operated using the electronic braking system. The release valve is preferably controllable using the controller independently of the electronic braking system.

The method may comprise detecting if a charging cable is engaged with the electric charging connector using one or more sensors. Determining that a charging cable is engaged with the electric charging connector may be performed by the controller, on a basis of the detection by the sensors.

The method of the second aspect may have one or more features corresponding to the use of the vehicle of the first aspect. Thus the above description of the vehicle of the first aspect, including but not limited to all technical advantages and alternative embodiments, may be equally applicable to the method of the second aspect.

Viewed from a third aspect, there is disclosed a vehicle comprising: a park release emergency valve in communication with a plurality of brakes; and a release valve; wherein the release valve is configured to selectively decompress air supplied to the park release emergency valve such that the vehicle is immobilised.

By providing a release valve which can decompress air supplied to the park release emergency valve, the plurality of brakes of the vehicle may be engaged and/or disengaged according to the control of the release valve. Thus immobilisation of the vehicle may be controlled by a component (i.e. the release valve) which may be easily retrofitted to existing vehicles.

Further, immobilisation of the vehicle may be controlled by a component (i.e. the release valve) in addition to existing control systems of the vehicle. The introduction of an additional control mechanism may provide redundancy in the available control systems, increasing reliability of operation of the vehicle.

The park release emergency valve, the plurality of brakes of the vehicle and the release valve may be part of a vehicle braking system. The braking system may generally comprise a number of control mechanisms for the plurality of brakes, each of which are in communication with a respective wheel of the vehicle. Each brake may be configured to decelerate, or immobilise, the vehicle. Each of the plurality of brakes may be operable as both a parking brake and a service brake. Alternatively, the plurality of brakes may comprise both a plurality of parking brakes and a plurality of service brakes.

The park release emergency valve is operable to immobilise the vehicle by selectively operating the plurality of brakes, preferably wherein the plurality of brakes comprise a plurality of parking brakes. The park release emergency valve may be configured to disengage the plurality of brakes by supplying compressed air to the plurality of brakes. The park release emergency valve may be configured to engage the plurality of parking brakes by removing a supply of compressed air to the plurality of brakes. Additionally or alternatively, the park release emergency valve may be configured to engage the plurality of brakes by decompressing air supplied to the plurality of brakes.

The park release emergency valve may be selectively operated.

The braking system may comprise an electronic braking system configured to selectively operate the park release emergency valve. The electronic braking system may be configured to control a flow of compressed air to one or more of the plurality of brakes.

The electronic braking system may be configured to control a flow of compressed air to the park release emergency valve, such that the park release emergency valve may engage and/or disengage the plurality of brakes accordingly.

The electronic braking system may be configured to operate one or more service brakes of the vehicle. The electronic braking system may be configured to engage the plurality of brakes by supplying compressed air to the plurality of brakes. The electronic braking system may be configured to disengage the plurality of brakes by removing a supply of compressed air to the plurality of brakes and/or by decompressing a supply of compressed air to the plurality of brakes.

The electronic braking system may be in electronic communication with one or more brake controls of the vehicle. Each of the one or more brake controls of the vehicle may be mechanically operable by a driver of the vehicle.

The release valve is configured to decompress fluid supplied to the park release emergency valve. This, in turn, decompresses fluid supplied from the park release emergency valve to the plurality of brakes, causing the plurality of brakes to engage. In this manner, control of the release valve may override control of the park release emergency valve.

The release valve may be a solenoid valve, and may more preferably be a servo valve.

The vehicle may comprise a controller configured to operate the release valve. The release valve is preferably in electronic communication with the controller. The release valve may be in wired and/or wireless communication with the controller.

As the release valve itself is configured to decompress fluid supplied to the park release emergency valve, and is operable directly by the controller, the release valve may be easily retrofitted to existing brake systems. As such, existing vehicles comprising park release emergency valves may be reconfigured such that they may be reliably immobilised when it is detected that a charging cable remains engaged to the vehicle. This may be particularly advantageous for vehicles comprising an existing electronic brake system, which may not be easily reconfigured or reprogrammed upon installation in a vehicle.

The controller may be configured to determine a state of the vehicle, and may be configured to selectively operate the release valve according a state of the vehicle.

The controller may be configured to determine that the vehicle is in a first state in response to receiving an activation signal from a remote server. The controller may be configured to activate the release valve such that the vehicle is immobilised in the first state.

The activation signal may be sent from the remote server, for example, in response to a user determining that the vehicle is stolen, or is not safe to be operated. In each of these situations it may be desirable to remotely immobilise the vehicle.

The vehicle may comprise an energy storage device. The energy storage device may require recharging at regular intervals. The vehicle may be an electric vehicle. The electric vehicle may be powered by the energy storage device. Additionally or alternatively, the vehicle may comprise one or more power demand components, such as a TRU, powered by the energy storage device.

The controller may be configured to determine that the vehicle is in a second state in response to determining that a charging cable is connected to an electric charging connector of the vehicle. The controller may be configured to activate the release valve such that the vehicle is immobilised in the second state.

By immobilising the vehicle when a charging cable is engaged with an electric charging connector of the vehicle, the vehicle is prevented from driving away when the charging cable is connected to the vehicle. This prevents the vehicle from driving away with the charging cable still engaged, which could damage the charging cable and/or the electric charging connector of the vehicle. Thus, when an operator or driver of the vehicle forgets to unplug the charging cable, or if the vehicle may still move once the charging cable is engaged to the vehicle, the vehicle is prevented from moving and a risk of accidental damage may be mitigated.

Further, the electric charging of vehicles via a charging cable may require the use of high voltage power supplies. If a charging cable were to become damaged, or were to rapidly disconnect in an uncontrolled manner due to movement of the vehicle, an electrical hazard may arise. Thus, by immobilising the vehicle when an electric charging cable is engaged to the vehicle, use of electric charging equipment for charging vehicles and equipment thereon may be made safer.

The vehicle may comprise one or more sensors, with the controller in communication with the one or more sensors. Each of the one or more sensors may be configured to detect that a charging cable is engaged with the electric charging connector.

The release valve may be located between the electronic braking system and the park release emergency valve.

Providing the release valve between the electronic braking system and park release emergency valve may allow the release valve to control a flow of compressed air to the park release emergency valve in a manner similar to that of the electronic braking system. As such, control of the park release emergency valve may be possible by either the release valve or the electronic braking system. However, as the release valve is not a part of the electronic braking system however, vehicles may be more easily retrofitted, or reconfigured, such that they may be immobilised upon determining that a charging cable is connected to the vehicle.

Further, as the release valve is located between the electronic braking system and the park release emergency valve, the release valve may override any control from the electronic braking system. For example, if the electronic braking system is operated so as to disengage the parking brake, and hence supply compressed air to the park release emergency valve, the release valve may decompress this air accordingly. As such the vehicle may be immobilised in desirable situations further to those initiated by the electronic braking system.

The release valve is preferably controllable independently of the electronic braking system.

By providing control of the release valve independent to any control by the electronic braking system, i.e. direct control of the release valve via the controller, the vehicle may be reliably immobilised independent of the operation of the electronic braking system. This may result in the vehicle being more reliably immobilised, as control of the release valve may override any control of the park release emergency valve and/or the release valve itself from the electronic braking system.

A pneumatic module may be in fluid communication with the park release emergency valve and the electronic braking system.

The pneumatic module may be configured to regulate a flow of compressed air to the electronic braking system, and may additionally be configured to store compressed air. The pneumatic module may comprise an air tank configured to store the compressed air.

The vehicle of the third aspect may have one or more features corresponding to those of the vehicle of the first aspect of the invention. Thus the above description of the vehicle of the first aspect, including but not limited to all technical advantages and alternative embodiments, may be equally applicable to the vehicle of the third aspect.

Certain exemplary embodiments of the invention are described below by way of example only and with reference to the accompanying drawings in which:
Figure 1 schematically shows a vehicle comprising a power management system and a braking system;
Figure 2a shows a side view of an electric charging connector in an unplugged configuration;
Figure 2b shows a side view of the electric charging connector of figure 2a and a charging cable in a plugged configuration;
Figure 3 schematically shows an electric charging connector and a charging cable in an unplugged configuration; and
Figure 4 schematically illustrates an electric charging connector and a charging cable in an unplugged configuration.

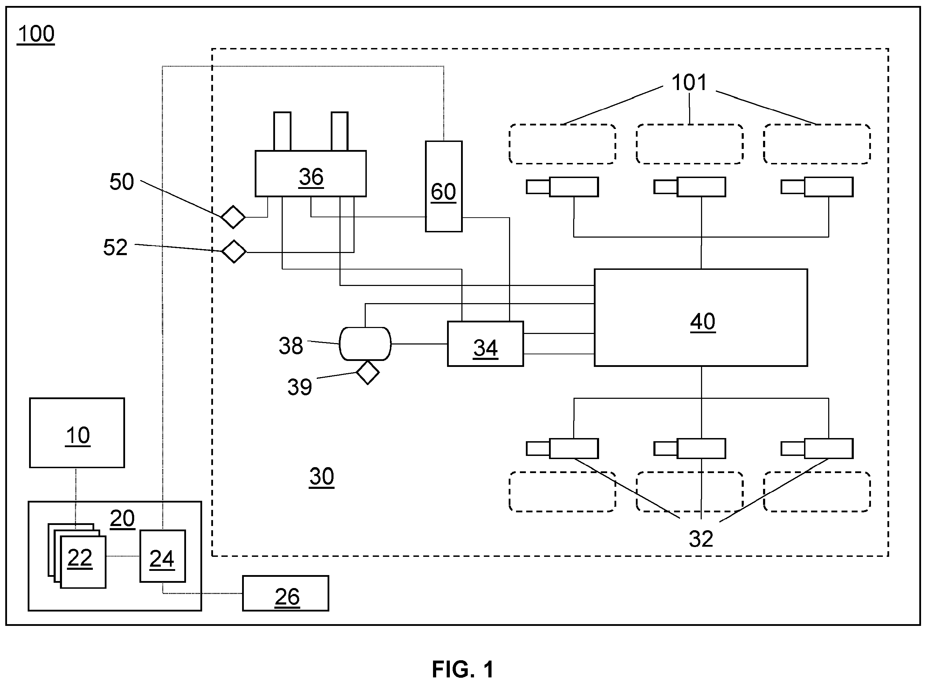

Figure 1 shows a vehicle 100. The vehicle 100 comprises a transport refrigeration unit (TRU) 10, a power management system 20, and a braking system 30. In the present embodiment the vehicle 100 is a trailer 100 for use in a tractor-trailer arrangement. The trailer 100 comprises a container or storage space (not shown) for the transportation of goods. An environment of the container is monitored, and regulated, by the TRU 10.

The trailer 100 comprises a plurality of wheels 101, which are controlled, i.e. selectively immobilised or decelerated, using the braking system 30. The braking system 30 comprises a plurality of brakes 32, each of which are arranged to control a respective wheel 101.

In the present arrangement an electronic braking system 40 is employed. The electronic braking system 40 is arranged to receive communication signals from the tractor, or other suitable driving vehicle, and control the brakes 32 accordingly. This is of particular use in systems such as tractor-trailer systems, where the trailer 100 is detachable from the driving vehicle. The braking system 30 of the present arrangement can therefore be considered a 'brake-by-wire' braking system 30, as control of the brakes 32 is performed using a braking system 30 which is remote, or not in fluid communication with, a brake pedal or other mechanical brake control a driver of the vehicle 100 may operate. When controlled by the electronic braking system 40, the brakes 32 can be considered as being service brakes 32.

The braking system 30 of the present embodiment uses pneumatic braking lines to control the brakes 32. The delivery of compressed, i.e. pressurised, air to the brakes 32 motivates one or more brake actuators (not shown) such that a brake pad is urged into contact with a rotating member in communication with, or part of, a respective wheel 101. The electronic braking system 40 is configured to deliver compressed air to the plurality of brakes 32 to actuate the brakes 32 as necessary.

The electronic braking system 40 is in flow communication with a pneumatic module 34 which regulates the flow of compressed air to the electronic braking system 40. The pneumatic module 34 receives compressed air from a source 50 such as a compressor of the vehicle 100, or of the driving vehicle. In the present embodiment, the pneumatic module 34 is in flow communication with a service brake air tank 38, which stores the compressed air. A drain valve 39 is also provided in communication with the air tank 38, to allow for the exhaustion of compressed air under certain conditions.

A park release emergency valve 36 is located in flow communication with each of the pneumatic module 34 and the electronic braking system 40. The park release emergency valve 36 is also in flow communication with the source of compressed air 50, and a brake line 52.

The brake line 52 is in flow communication with a parking, or emergency, brake (not shown). The parking brake comprises a spring mechanism which is resiliently biased so as to apply the brakes 32 to the wheels 101. When compressed air is supplied to the parking brake, the spring mechanism is disengaged because the air pressure provides work against the spring mechanism. However, if the supply of compressed air is removed or fails, the parking brake is engaged because there is nothing to prevent the spring mechanism from applying the brake to the wheels 101. The park release emergency valve 36 therefore, as well as regulating the supply of compressed air to the pneumatic module 34, controls the supply of compressed air to the parking brake via brake line 52.

The parking brake is thus capable of being used to actuate the plurality of brakes 32. That is, each brake 32 can be actuated by both a brake actuator (in which it acts as a service brake) and a spring mechanism (in which it acts as a parking brake). In various embodiments, the parking brake can instead control a separate and distinct brake to that of the service brakes.

The electronic braking system 40 is preferably configured to control the functions of the park release emergency valve 36. For example, the electronic braking system 40 can control a flow of compressed air to the park release emergency valve 36 as appropriate. Additionally or alternatively, the park release emergency valve 36 can be controlled by other control systems in the event the electronic braking system 40 fails, or as desired.

The TRU 10 requires a supply of electrical power to operate. The power management system 20 therefore supplies electrical power to the TRU 10. The power management system 20 can also be used to supply electrical power to the electronic braking system 40, if it does not comprise its own respective power supply (e.g. from a tractor of a tractor-trailer system, or otherwise).

The power management system 20 comprises an energy storage device 22, such as a battery pack comprising a plurality of batteries, and a controller 24. The power management system 20 also comprises an electric charging connector 26, which is configured to engage a charging cable. By plugging a charging cable connected to a power source, such as a remote charging station or a mains electrical power supply, the energy storage device 22 can be recharged.

If an operator of the vehicle 100 drives the vehicle 100 whilst the electric charging connector 26 is connected to a charging cable, the vehicle 100 could be damaged through improper use. Similarly, a device to which the charging cable is attached to could also be damaged. Further, such damage could cause an electrical hazard.

The controller 24 is therefore configured to determine if a charging cable is engaged with the electric charging connector, and operate the braking system 30 such that the vehicle 100 is immobilised when a charging cable is engaged. In this way, the driver of the vehicle 100 is prevented from leaving, or driving away, in a manner which could cause damage. To immobilise the vehicle 100 in emergency situations, the park release emergency valve 36 is controlled. Activation of the parking brake reliably immobilises the vehicle 100.

In the arrangement shown in figure 1, the park release emergency valve 36 is controlled indirectly by the controller 24. That is, the controller 24 is not directly in control with the park release emergency valve 36. Instead, a release valve 60 is located in flow communication with the park release emergency valve 36.

The release valve 60 is in electronic communication with the controller 24 via suitable communication protocols. In response to the controller 24 determining that a charging cable is connected to the electric charging connector 26, the release valve 60 is actuated. Actuation of the release valve 60 causes the decompression of fluid supplied to the park release emergency valve 36. The pressure of air supplied to the park release emergency valve 36 is thus reduced, such that the spring mechanism of the parking brake is capable of applying a brake to the wheels 101.

Upon determining that the charging cable is disconnected, or that there is no charging cable connected to the electric charging connector 26, the controller 24 will send a signal to the release valve 60 such that it is deactivated. When the release valve 60 is no longer actuated, compressed air is supplied to the park release emergency valve 36 such that the parking brake is disengaged.

The release valve 60 is controllable independently of the electronic braking system 40, and hence is capable of being retrofitted to existing systems comprising an electronic braking system 40 and a park release emergency valve 36 without requiring extensive modification or reprogramming of the electronic braking system 40 itself. Further, as the release valve 60 is controllable independently of the electronic braking system 40, a secondary emergency brake control system can be implemented. This secondary emergency brake control system can provide redundancy, or remote operation, of the parking brake in situations where the electronic braking system 40 is not optimised to do so.

The controller 24 is capable of determining if a charging cable is connected to the electric charging connector 26 using one or more sensors. Each of the one or more sensors is configured to detect that a charging cable is engaged with the electric charging connector 26.

In one arrangement, the one or more sensors may comprise a voltmeter present in electrical communication with the controller 24. The voltmeter is configured to detect a voltage when the power management system 20 receives electrical power by a charging cable.

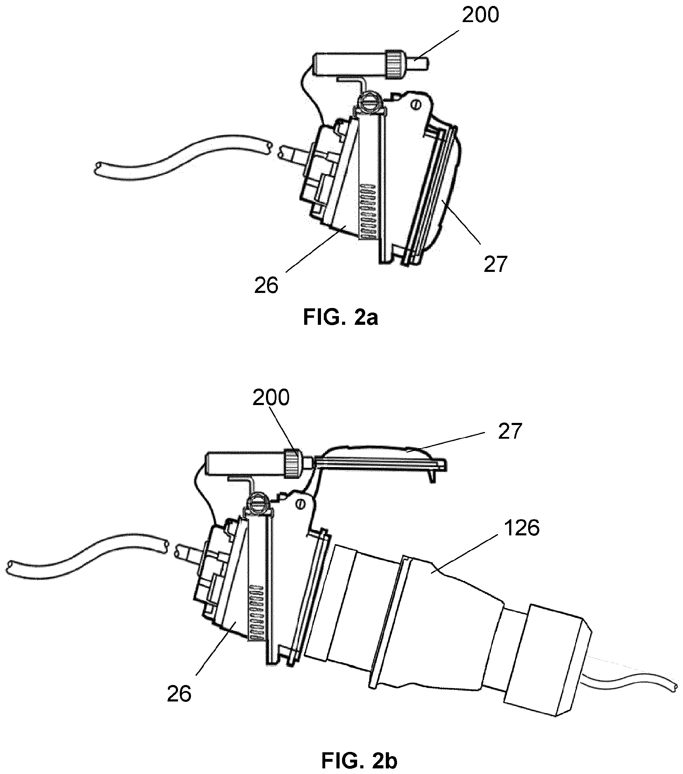

Figure 2a shows the electric charging connector 26 in an unplugged configuration. The electric charging connector 26 comprises a depressible pin 200, connected to the electric charging connector 26. When a charging cable is unplugged, or disengaged from the electric charging connector 26, a lid 27 of the electric charging connector 26 remains closed.

Figure 2b shows the electric charging connector 26 in a plugged configuration, in which a charging cable 126 engages the electric charging connector 26. Engagement of the charging cable 126 maintains the lid 27 of the electric charging connector 26 in a lifted position. In the lifted position, the lid 27 depresses the depressible pin 200. Actuation of the depressible pin 200 activates a switch, such that the controller 24 can determine that a charging cable 126 is engaged with the electric charging connector 26.

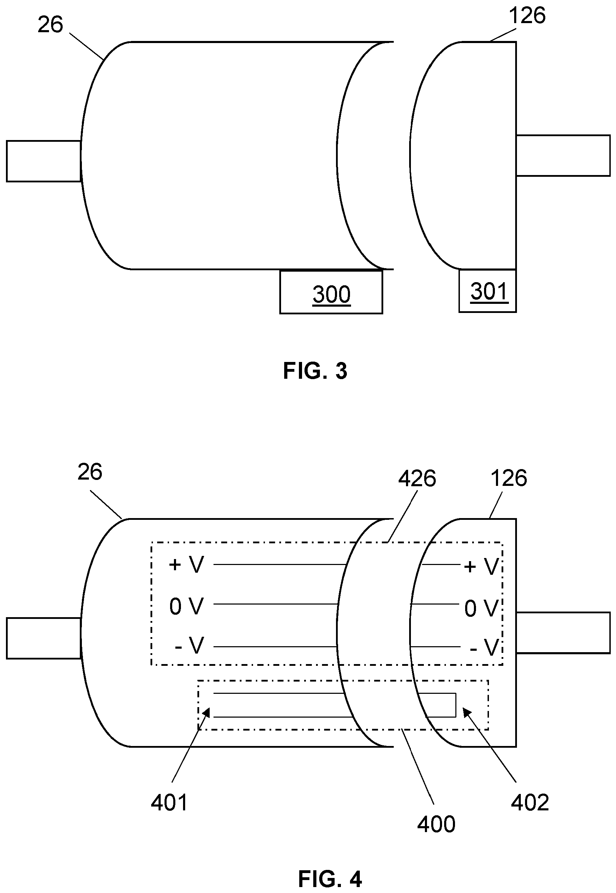

Figure 3 shows an electric charging connector 26 disengaged from a charging cable 126. In figure 3, the one or more sensors comprises a magnetic switch 301. When the charging cable 126 is disengaged from the electric charging connector 26, the magnetic switch 300 is deactivated. That is, there is a separation between two electrical contacts present in the magnetic switch 300. However, upon engagement of the charging cable 126 to the electric charging connector 26, a magnet 301 attached to the charging cable 126 motivates the electrical contacts together within the magnetic switch 300, due to the magnetic field of the magnet 301. Thus, when the charging cable 126 engages the electric charging connector 26, proximity of the magnet 301 to the magnetic switch 300 activates the magnetic switch 300. The controller 24 is in communication with the magnetic switch 300, and hence can determine that a charging cable 126 is engaged to the electric charging connector 24.

Figure 4 shows an electric charging connector 26 disengaged from a charging cable 126. In figure 4, the one or more sensors comprises a sensing circuit 400. The charging cable 126 comprises a plurality of electrical connectors which engage with a plurality of corresponding connectors of the electric charging connector 26. In this way, an electrical flow path 426 is established between the charging cable 126 and the electric charging connector 26, such that electrical power is supplied to the power management system 20.

The electric charging connector 26 also comprises two other connectors 401, which are part of the sensing circuit 400. The two connectors 401 of the electric charging connector 26 are not in electrical communication with one another, and hence form an incomplete sensing circuit 401 when taken in isolation. However, the sensing circuit 400 is completed when the charging cable 126 engages the electric charging connector 26. When the sensing circuit 400 is completed, the controller 24 is capable of determining that a current is flowing using known techniques.

The electric charging connector 126 thus also comprises two contact points 402 which are not themselves connected to a source of electricity (i.e. when the charging cable 126 is unplugged from the electric charging connector 26, they do not carry an electric current). Each of these contact points 402 are in communication with one another, and are also configured to engage each of the connectors 401 of the electric charging connector 26, upon engagement of the charging cable 126. Thus, when the charging cable 126 engages the electric charging connector 26, the sensing circuit 400 is completed and the controller 24 can determine that the charging cable 126 is engaged.

In various embodiments, the controller 24 is in wired and/or wireless communication with the electronic braking system 40. The wired and/or wireless communication is facilitated using appropriate electronic communication protocols. The controller 24 is configured to send a signal to the electronic braking system 40 when the controller 24 determines that a charging cable is engaged to the electrical charging connector 26. In response, the electronic braking system 40 is then configured to operate the park release emergency valve 36, such that the vehicle 100 is immobilised.

## Claims

1. A vehicle (100) comprising:
a transport refrigeration unit (10);
a power management system (20) for supplying power to the transport refrigeration unit (10), wherein the power management system (20) comprises an electric charging connector (26) and a controller (24) configured to determine if a charging cable is engaged with the electric charging connector (26); and
a braking system (30);
wherein, in response to the controller (24) determining that a charging cable is engaged with the electric charging connector (26), the braking system (30) is configured to immobilise the vehicle (100);
**characterised in that**:
the braking system (30) comprises a park release emergency valve (36) in communication with a plurality of brakes (32);
wherein the park release emergency valve (36) is operable to immobilise the vehicle (100); and
wherein the braking system (30) comprises a release valve (60), wherein, in response to the controller (24) determining that a charging cable is engaged with the electric charging connector (26), the release valve (60) is configured to decompress fluid supplied to the park release emergency valve (36) such that the vehicle (100) is immobilised.

2. A vehicle (100) as claimed in claim 1, wherein the braking system (30) comprises an electronic braking system (40) configured to selectively operate the park release emergency valve (36);
wherein the release valve (60) is located between the electronic braking system (40) and the park release emergency valve (36).

3. A vehicle (100) as claimed in claim 2, wherein the release valve (60) is controllable independently of the electronic braking system (40).

4. A vehicle (100) as claimed in claim 2 or 3, wherein a pneumatic module (34) is in fluid communication with the park release emergency valve (36) and the electronic braking system (40).

5. A vehicle (100) as claimed in any preceding claim, comprising one or more sensors (200; 300; 400);
wherein the controller (24) is in communication with the one or more sensors (200; 300; 401);
wherein each of the one or more sensors (200; 300; 401) is configured to detect that a charging cable (136) is engaged with the electric charging connector (26).

6. A vehicle (100) as claimed in claim 5, wherein the one or more sensors comprises a voltmeter;
wherein the voltmeter is configured to detect a voltage when the power management system (20) receives electrical power by a charging cable (126).

7. A vehicle (100) as claimed in claim 5 or 6, wherein the one or more sensors comprises a magnetic switch (300);
wherein the magnetic switch (300) is configured to activate when a charging cable (126) is engaged with the electric charging connector (26).

8. A vehicle (100) as claimed in claim 5, 6 or 7, wherein the one or more sensors comprises a depressible pin (200);
wherein the depressible pin (200) is configured to depress when a charging cable (126) is engaged with the electric charging connector (26).

9. A vehicle (100) as claimed in any of claims 5 to 8, wherein the one or more sensors comprises an incomplete sensing circuit (401);
wherein the incomplete sensing circuit (401) is configured to be completed when a charging cable (126) is engaged with the electric charging connector (26).

10. A vehicle (100) as claimed in any preceding claim, wherein the vehicle (100) is a trailer for a tractor.

11. A method of immobilising a vehicle (100) as claimed in any preceding claim when a charging cable is connected thereto, the method comprising:
determining that a charging cable is engaged with the electric charging connector (26); and
subsequently activating the braking system (30) such that the vehicle (100) is immobilised.

## Patentansprüche

1. Fahrzeug (100), umfassend:
eine Transportkühleinheit (10);
ein Leistungsverwaltungssystem (20) zum Liefern von Leistung an die Transportkühleinheit (10), wobei das Leistungsverwaltungssystem (20) einen elektrischen Ladeverbinder (26) und eine Steuerung (24) umfasst, die konfiguriert ist, um zu bestimmen, ob ein Ladekabel mit dem elektrischen Ladeverbinder (26) in Eingriff steht; und
ein Bremssystem (30);
wobei als Reaktion darauf, dass die Steuerung (24) bestimmt, dass ein Ladekabel mit dem elektrischen Ladeverbinder (26) in Eingriff steht, das Bremssystem (30) konfiguriert ist, um das Fahrzeug (100) zu immobilisieren;
**dadurch gekennzeichnet, dass**:
das Bremssystem (30) ein Parklösenotventil (36) in Kommunikation mit einer Vielzahl von Bremsen (32) umfasst;
wobei das Parklösenotventil (36) betreibbar ist, um das Fahrzeug (100) zu immobilisieren; und
wobei das Bremssystem (30) ein Löseventil (60) umfasst, wobei als Reaktion darauf, dass die Steuerung (24) bestimmt, dass ein Ladekabel mit dem elektrischen Ladeverbinder (26) in Eingriff steht, das Löseventil (60) konfiguriert ist, um Fluid, das an das Parklösenotventil (36) geliefert wird, zu dekomprimieren, sodass das Fahrzeug (100) immobilisiert wird.

2. Fahrzeug (100) nach Anspruch 1, wobei das Bremssystem (30) ein elektronisches Bremssystem (40) umfasst, das konfiguriert ist, um das Parklösenotventil (36) selektiv zu betreiben; wobei das Löseventil (60) zwischen dem elektronischen Bremssystem (40) und dem Parklösenotventil (36) angeordnet ist.

3. Fahrzeug (100) nach Anspruch 2, wobei das Löseventil (60) unabhängig von dem elektronischen Bremssystem (40) steuerbar ist.

4. Fahrzeug (100) nach Anspruch 2 oder 3, wobei ein Pneumatikmodul (34) in Fluidkommunikation mit dem Parklösenotventil (36) und dem elektronischen Bremssystem (40) steht.

5. Fahrzeug (100) nach einem der vorhergehenden Ansprüche, das einen oder mehrere Sensoren (200; 300; 400) umfasst;
wobei die Steuerung (24) in Kommunikation mit dem einen oder den mehreren Sensoren (200; 300; 401) steht;
wobei jeder des einen oder der mehreren Sensoren (200; 300; 401) konfiguriert ist, um zu detektieren, dass ein Ladekabel (136) mit dem elektrischen Ladeverbinder (26) in Eingriff steht.

6. Fahrzeug (100) nach Anspruch 5, wobei der eine oder die mehreren Sensoren ein Voltmeter umfassen;
wobei das Voltmeter konfiguriert ist, um eine Spannung zu detektieren, wenn das Leistungsverwaltungssystem (20) elektrische Leistung durch ein Ladekabel (126) empfängt.

7. Fahrzeug (100) nach Anspruch 5 oder 6, wobei der eine oder die mehreren Sensoren einen Magnetschalter (300) umfassen;
wobei der Magnetschalter (300) konfiguriert ist, um aktiviert zu werden, wenn ein Ladekabel (126) mit dem elektrischen Ladeverbinder (26) in Eingriff steht.

8. Fahrzeug (100) nach Anspruch 5, 6 oder 7, wobei der eine oder die mehreren Sensoren einen eindrückbaren Stift (200) umfassen; wobei der eindrückbare Stift (200) konfiguriert ist, um eingedrückt zu werden, wenn ein Ladekabel (126) mit dem elektrischen Ladeverbinder (26) in Eingriff steht.

9. Fahrzeug (100) nach einem der Ansprüche 5 bis 8, wobei der eine oder die mehreren Sensoren einen unvollständigen Erfassungsschaltkreis (401) umfassen;
wobei der unvollständige Erfassungsschaltkreis (401) konfiguriert ist, um vervollständigt zu werden, wenn ein Ladekabel (126) mit dem elektrischen Ladeverbinder (26) in Eingriff steht.

10. Fahrzeug (100) nach einem der vorhergehenden Ansprüche, wobei das Fahrzeug (100) ein Anhänger für eine Zugmaschine ist.

11. Verfahren zum Immobilisieren eines Fahrzeugs (100) nach einem der vorhergehenden Ansprüche, wenn ein Ladekabel damit verbunden ist, wobei das Verfahren umfasst:
Bestimmen, dass ein Ladekabel mit dem elektrischen Ladeverbinder (26) in Eingriff steht; und
anschließendes Aktivieren des Bremssystems (30), sodass das Fahrzeug (100) immobilisiert wird.

## Revendications

1. Véhicule (100), comprenant :
une unité de réfrigération de transport (10) ;
un système de gestion d'alimentation (20) destiné à alimenter l'unité de réfrigération de transport (10), le système de gestion d'alimentation (20) comprenant un connecteur de charge électrique (26) et un dispositif de commande (24) configuré pour déterminer si un câble de charge est en prise avec le connecteur de charge électrique (26) ; et
un système de freinage (30) ;
dans lequel, après que le dispositif de commande (24) a déterminé qu'un câble de charge est en prise avec le connecteur de charge électrique (26), le système de freinage (30) est configuré pour immobiliser le véhicule (100) ;
**caractérisé en ce que** :
le système de freinage (30) comprend une vanne de desserrage d'urgence du frein de stationnement (36) en communication avec une pluralité de freins (32) ;
dans lequel la vanne de desserrage d'urgence du frein de stationnement (36) est actionnable pour immobiliser le véhicule (100) ; et
dans lequel le système de freinage (30) comprend une soupape de sûreté (60), dans lequel, après que le dispositif de commande (24) a déterminé qu'un câble de charge est en prise avec le connecteur de charge électrique (26), la soupape de sûreté (60) est configurée pour décomprimer le fluide fourni à la vanne de desserrage d'urgence du frein de stationnement (36) de telle sorte que le véhicule (100) soit immobilisé.

2. Véhicule (100) selon la revendication 1, dans lequel le système de freinage (30) comprend un système de freinage électronique (40) configuré pour actionner sélectivement la vanne de desserrage d'urgence du frein de stationnement (36) ;
dans lequel la soupape de sûreté (60) est située entre le système de freinage électronique (40) et la vanne de desserrage d'urgence du frein de stationnement (36).

3. Véhicule (100) selon la revendication 2, dans lequel la soupape de sûreté (60) peut être commandée indépendamment du système de freinage électronique (40).

4. Véhicule (100) selon la revendication 2 ou 3, dans lequel un module pneumatique (34) est en communication fluidique avec la vanne de desserrage d'urgence du frein de stationnement (36) et le système de freinage électronique (40).

5. Véhicule (100) selon une quelconque revendication précédente, comprenant un ou plusieurs capteurs (200 ; 300 ; 400) ;
dans lequel le dispositif de commande (24) est en communication avec les un ou plusieurs capteurs (200 ; 300 ; 401) ;
dans lequel chacun des un ou plusieurs capteurs (200 ; 300 ; 401) est configuré pour détecter qu'un câble de charge (136) est en prise avec le connecteur de charge électrique (26).

6. Véhicule (100) selon la revendication 5, dans lequel les un ou plusieurs capteurs comprennent un voltmètre ;
dans lequel le voltmètre est configuré pour détecter une tension lorsque le système de gestion d'alimentation (20) reçoit de l'énergie électrique par un câble de charge (126).

7. Véhicule (100) selon la revendication 5 ou 6, dans lequel les un ou plusieurs capteurs comprennent un commutateur magnétique (300) ;
dans lequel le commutateur magnétique (300) est configuré pour s'activer lorsqu'un câble de charge (126) est en prise avec le connecteur de charge électrique (26).

8. Véhicule (100) selon la revendication 5, 6 ou 7, dans lequel les un ou plusieurs capteurs comprennent une goupille enfonçable (200) ;
dans lequel la goupille enfonçable (200) est configurée pour s'enfoncer lorsqu'un câble de charge (126) est en prise avec le connecteur de charge électrique (26).

9. Véhicule (100) selon l'une quelconque des revendications 5 à 8, dans lequel les un ou plusieurs capteurs comprennent un circuit de détection incomplet (401) ;
dans lequel le circuit de détection incomplet (401) est configuré pour être complété lorsqu'un câble de charge (126) est en prise avec le connecteur de charge électrique (26).

10. Véhicule (100) selon une quelconque revendication précédente, le véhicule (100) étant une remorque pour un tracteur.

11. Procédé d'immobilisation d'un véhicule (100) selon une quelconque revendication précédente, lorsqu'un câble de charge y est connecté, le procédé comprenant les étapes consistant à :
déterminer qu'un câble de charge est en prise avec le connecteur de charge électrique (26) ; et
activer ensuite le système de freinage (30) de sorte que le véhicule (100) soit immobilisé.
